# DEMANDE DE BREVET EUROPEEN

(11) **EP 0 831 261 A1**
(43) Date de publication de la demande: **25.03.1998**
(21) Numéro de dépôt: 97402167.7
(22) Date de dépôt: 18.09.1997
(51) Int. Cl.: F16K 31/60

(54) **Cartouche de robinet mitigeur à limitation ajustable de débit**

(30) Priorité: 20.09.1996 FR 9611503
(71) Demandeur: NORTON DESMARQUEST FINE CERAMICS, 92400 Courbevoie (FR)
(72) Inventeur: Delaisement, Yves, 94440 Villecresnes (FR)
(74) Mandataire: Rinuy, Santarelli

(57) **Abrégé**

Une cartouche de robinet mitigeur comportant un corps (10) muni d'une douille (23) ayant un axe de référence, des éléments internes de réglage de débit disposés à l'intérieur du corps et un levier (20), coopérant avec ces éléments internes pour régler le débit, articulé sur la douille (23) autour d'un arbre transversal (24) et ayant une partie extérieure (21) débouchant hors du corps, le levier et la douille comportant des portées complémentaires d'appui (25, 26) déterminant conjointement pour le levier une configuration de débit extrême, caractérisée en ce que la portée d'appui (25) du levier fait partie d'une portion en saillie d'un tiroir (27) monté coulissant dans un trou transversal (28) de ce levier, ce tiroir coopérant avec un organe de réglage (31) mobile dans un logement (30) du levier accessible à partir de l'extérieur de la cartouche.

## Description

L'invention concerne une cartouche de robinet mitigeur à limitation ajustable de débit.

Ainsi qu'on le sait, une cartouche de robinet mitigeur est un ensemble adapté à être placé dans un corps de robinet mitigeur, entre deux conduits d'arrivée d'eau, eau froide et eau chaude respectivement, et un conduit de sortie d'eau mélangée généralement ménagé dans une portion, en pratique appelé bec, ménagée en saillie vis-à-vis du corps de robinet.

Cette cartouche sert à régler les deux débits d'eau froide et d'eau chaude à mélanger. En d'autres termes, pour l'utilisateur, cette cartouche sert à régler d'une part, le débit global, et d'autre part, la proportion eau froide/eau chaude, c'est-à-dire la température de ce débit global.

Pour ce faire, la cartouche comporte en pratique un disque fixe, avantageusement en céramique, et un disque mobile plaqué contre le disque fixe et pouvant glisser en translation et en rotation sur celui-ci. Le disque fixe comporte au moins deux ouvertures communiquant respectivement avec les conduits d'arrivée d'eau froide et d'eau chaude, et le disque mobile a une géométrie propre à obturer plus ou moins, selon sa position et son orientation, chacune des ouvertures du disque fixe.

La position et l'orientation du disque mobile par rapport au disque fixe sont en principe commandées par un levier unique débouchant hors de la cartouche et couplé à un élément de manoeuvre, tel qu'une poignée, mobile par rapport au corps du robinet et accessible pour un utilisateur.

En pratique, ce levier (il en est de même pour l'élément de manoeuvre) admet un axe de référence, fixe par rapport au corps de la cartouche, et l'inclinaison du levier par rapport à cet axe détermine le débit global tandis que sa position angulaire autour de cet axe détermine la proportion entre eau chaude et eau froide.

La cartouche comporte généralement un corps de cartouche et, dans ce dernier, une douille (ou collet) adaptée à tourner autour d'un premier axe de ce corps, de préférence confondu avec l'axe précité de référence du levier, tandis que ce levier traverse cette douille en lui étant articulé autour d'un arbre transversal lié à cette douille.

Cette douille détermine pour le levier un débattement angulaire limité autour de l'arbre transversal, entre une configuration de débit minimal, en pratique nul, correspondant à une inclinaison minimale par rapport à l'axe de référence, et une configuration de débit maximal correspondant à une inclinaison maximale du levier par rapport à cet axe de référence.

On comprend que pour une cartouche donnée comportant une douille donnée et un levier donné, ce débattement est en principe fixe.

Or, il a été ressenti le besoin de pouvoir ajuster ou régler le débit maximum autorisé par une cartouche, en fonction de son utilisation.

Des solutions ont déjà été proposées pour permettre un tel réglage.

Une première solution a consisté à prévoir sur le levier une portion d'appui mobile longitudinalement ; il s'agit d'une pièce rapportée présentant une rampe inclinée par rapport à l'axe longitudinal du levier ; selon la position longitudinale de cette pièce sur le levier, la portion de la rampe qui vient en butée sur une portion correspondante de la douille est plus ou moins près de l'axe longitudinal du levier, d'où une inclinaison maximale plus ou moins grande du levier par rapport à son axe de référence ; cette solution est assez complexe puisqu'il faut prévoir un mode d'accrochage fiable de cette pièce rapportée sur la surface extérieure du levier (il ne faut pas qu'elle puisse se détacher), ce qui paraît a priori incompatible avec un réglage aisé de la position longitudinale de cette pièce rapportée.

Une seconde solution semble avoir consisté à prévoir sur la douille une portion d'appui mobile soit radialement, soit axialement, sous l'action par exemple d'un système vis-écrou. Mais ces solutions ont l'inconvénient de nécessiter un aménagement spécifique de la douille par rapport à sa configuration classique, d'où une fragilisation de la douille. Or il ne peut raisonnablement être toléré que la douille puisse se rompre et que l'étanchéité entre les disques puisse se détériorer, ce qui conduirait à des fuites. D'autre part, l'ajustement en position de la butée mobile ne peut souvent se faire en pratique que lorsque la cartouche est à l'extérieur du corps de robinet, voire lorsque la douille est à l'extérieur de la cartouche. Il peut ainsi être parfois nécessaire de procéder à de nombreuses opérations de montage/démontage de la cartouche vis-à-vis du corps avant de trouver le bon réglage du débit maximal.

L'invention a pour objet de pallier ces inconvénients grâce à la mise en oeuvre d'une butée de réglage de débit extrême (en pratique de débit maximum) dont la mise en place puisse se faire de manière à la fois fiable et aisée, le plus tard possible lors de la fabrication des éléments constitutifs de la cartouche, sans fragilisation de la douille, et dont le réglage en position puisse se faire facilement, de préférence même lorsque la cartouche est en place dans un corps de robinet.

L'invention propose à cet effet une cartouche de robinet mitigeur comportant un corps muni d'une douille et ayant un axe de référence Z-Z, des éléments internes de réglage de débit disposés à l'intérieur du corps et un levier, coopérant avec ces éléments internes pour régler le débit, articulé sur la douille autour d'un arbre transversal et ayant une partie extérieure débouchant hors du corps, le levier et la douille comportant des portées complémentaires d'appui déterminant conjointement pour le levier une configuration de débit extrême, caractérisée en ce que la portée d'appui du levier fait partie d'une portion en saillie d'un tiroir monté coulissant dans un trou transversal de ce levier, ce tiroir coopérant avec un organe de réglage mobile dans un logement du levier accessible à partir de l'extérieur de la cartouche.

On appréciera que la mise en place du tiroir peut se faire sur tout levier classique, par simple aménagement d'un trou transversal, borgne ou non. Il n'y a pas besoin de modifier la douille. Quant à l'organe de réglage il peut lui aussi être mis en place sur tout levier classique, par simple perçage d'un logement, borgne ou non, dans le sens transversal ou dans le sens longitudinal du levier, par exemple dans le prolongement de l'alésage longitudinal classiquement réalisé pour recevoir une vis servant à assujettir au levier l'organe de manoeuvre accessible à l'utilisateur (ce logement peut aussi avoir une inclinaison quelconque inférieure à 90° par rapport à l'axe longitudinal du levier). Il n'est donc pas nécessaire de modifier les étapes classiques de fabrication du levier. Par ailleurs, surtout lorsque l'organe de réglage est près de l'embouchure de la douille et/ou mobile longitudinalement dans le levier, il n'est pas nécessaire de démonter la cartouche pour y avoir accès : il suffit de démonter l'organe de manoeuvre accessible à l'opérateur. En tout état de cause, il n'est pas nécessaire de désassembler la cartouche. Il faut noter ici que la notion de trou transversal pour le tiroir n'implique pas nécessairement qu'il ait une inclinaison égale à 90° par rapport à l'axe longitudinal du levier. L'invention peut même permettre de pouvoir régler la position de l'organe de manoeuvre sans avoir à démonter la poignée du robinet.

Ainsi, selon des particularités préférées de l'invention essentiellement combinées :
le tiroir comporte une rampe inclinée par rapport à l'axe longitudinal du logement du levier et ce dernier a une inclinaison non nulle par rapport à la direction du trou transversal du levier,
- le logement du levier est au moins approximativement longitudinal,
- le logement est alésé et l'organe de réglage est une vis de réglage,
- la vis de réglage comporte une extrémité tronconique dont le demi-angle au sommet est sensiblement égal à l'inclinaison de la rampe inclinée par rapport à l'axe longitudinal du logement du levier,
- le logement longitudinal de l'organe de réglage est ménagé dans le prolongement d'un logement alésé ménagé dans l'extrémité du levier,
- le trou transversal est ménagé dans le levier entre l'arbre transversal et l'extrémité du levier
- le tiroir a une section non circulaire,
- le tiroir a une section polygonale,
- le tiroir a une section sensiblement rectangulaire dont la plus grande distance s'étend perpendiculairement à l'axe longitudinal du levier,
- la portion en saillie du tiroir est convexe,
- la portion en saillie du tiroir est une portion de cylindre s'étendant transversalement à l'axe longitudinal du levier.

Des objets, caractéristiques et avantages de l'invention ressortiront de la description qui suit donnée à titre d'exemple en regard des dessins annexés sur lesquels :
- la figure 1 est une vue en coupe axiale, selon la ligne brisée I-I de la figure 2, d'une cartouche conforme à l'invention,
- la figure 2 est une vue de dessous, selon la flèche Il de la figure 1,
- la figure 3 est une vue en coupe axiale du levier de manoeuvre de cette cartouche,
- la figure 4 est une vue en élévation de ce levier, avec arrachement partiel, selon la flèche IV de la figure 3,
- la figure 5 est une vue de dessus de ce levier,
- la figure 6 est une vue schématique partielle de la partie de la cartouche qui comporte le levier, celui-ci étant en configuration de débit minimum,
- la figure 7 est une vue analogue à celle de la figure 6, le levier étant en configuration de débit maximum, et
- la figure 8 est une vue analogue à celle de la figure 6, le levier étant en une configuration intermédiaire réglable de débit maximum.

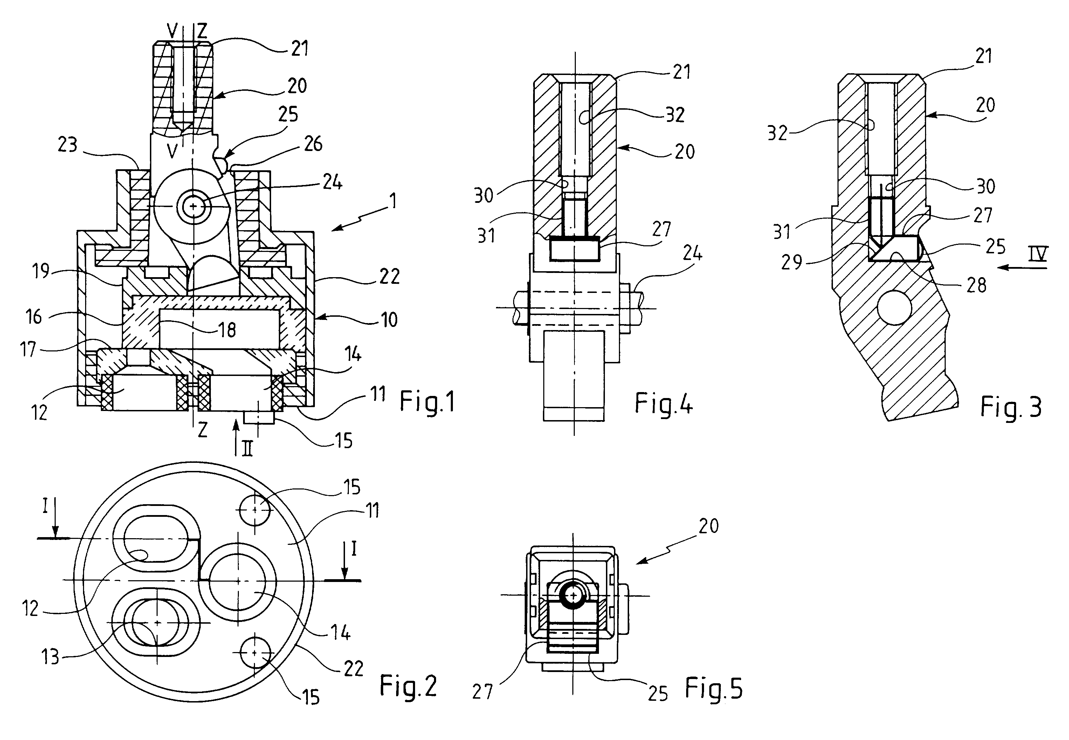

La figure 1 représente une cartouche de robinet mitigeur 1 adaptée à être montée dans un corps de robinet non représenté en sorte de régler les sections de communication entre des conduits d'arrivée d'eau froide et d'eau chaude, d'une part, et un conduit d'eau mélangée, d'autre part.

Cette cartouche comporte un corps 10 dont le fond 11 est, dans l'exemple représenté, muni de deux ouvertures d'arrivée d'eau froide et d'eau chaude 12 et 13, respectivement, et d'une sortie d'eau mélangée 14. Le fond est souvent muni également de plots 15 destinés à faciliter le positionnement de la cartouche dans un corps de robinet.

Les sections de communication entre les ouvertures 12 et 13, et l'ouverture 14, sont déterminées par la position et l'orientation relatives d'un disque mobile 16 mobile par rapport à un disque fixe 17. Ces disques sont avantageusement en céramique. Le disque mobile comporte en pratique une chambre 18 adaptée à coiffer au moins en partie les ouvertures 12, 13 et 14.

Les mouvements du disque mobile 16 par rapport au disque fixe 17 sont commandés, ici indirectement par l'intermédiaire d'un disque couvre-plaquette 19 (coiffant le disque mobile qui est souvent appelé plaquette), par un levier de manoeuvre 20 dont une partie 21 est accessible de l'extérieur du corps de la cartouche.

Ce levier de manoeuvre admet deux degrés de mouvement.

Il peut tout d'abord tourner autour d'un axe de référence Z-Z lié à la cartouche ; cette cartouche comporte généralement une surface latérale cylindrique 22 dont l'axe définit cet axe de référence, et une douille 23, coaxiale à cette surface latérale cylindrique 22 et traversée par le levier. Cette douille est attelée axialement à cette surface latérale mais peut tourner par rapport à celle-ci autour de l'axe de référence. En fait, ce n'est pas à ce degré de liberté que l'invention s'intéresse tout particulièrement.

L'invention concerne par contre le mouvement que le levier peut avoir par rapport à la douille, autour d'un arbre transversal 24.

Ce mouvement est limité angulairement entre deux configurations dans lesquelles ce levier vient, dans un sens ou dans l'autre, en butée contre l'intérieur de la douille.

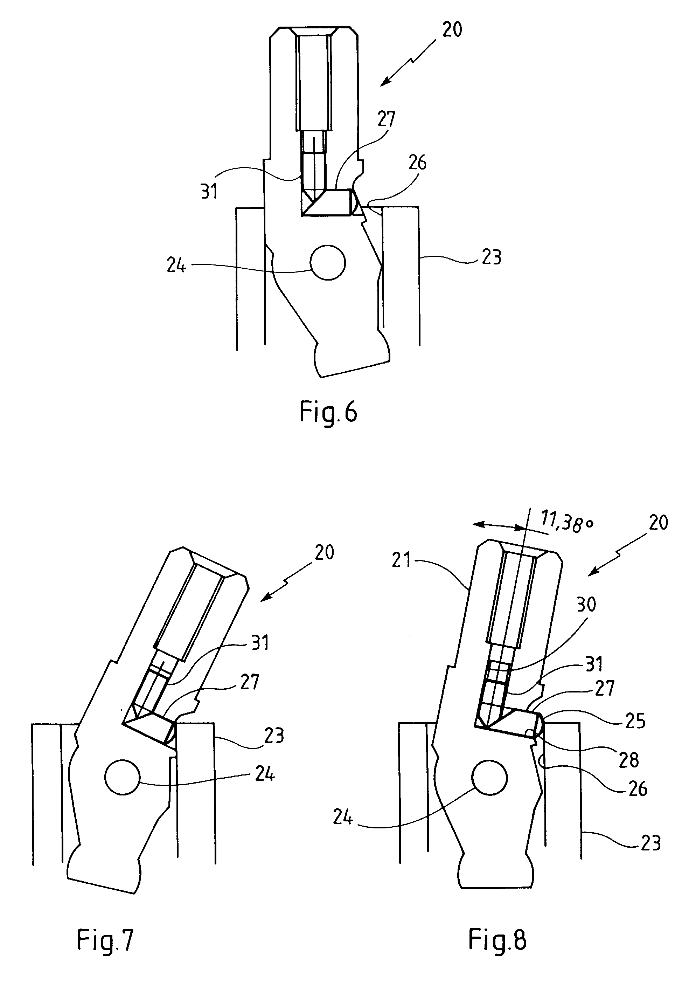

Les figures 1 et 6 correspondent à une configuration dans laquelle le débit est minimal (il est même nul puisque le disque mobile obture les trous d'arrivée d'eau du disque fixe), tandis que le levier est sensiblement vertical, en butée de pivotement vers la gauche, en ayant son axe longitudinal V-V sensiblement parallèle à l'axe de référence Z-Z.

Le levier 20 comporte sur sa surface extérieure une portion d'appui 25 destinée à venir en appui contre une portée d'appui complémentaire 26 liée à la douille, en sorte de limiter le pivotement du levier vers la droite et donc de limiter le débit maximum traversant la cartouche.

Selon l'invention, cette portion d'appui du levier fait partie d'une portion en saillie d'un tiroir 27 monté coulissant dans un trou transversal 28 ménagé dans ce levier ; ce tiroir comporte une rampe 29 inclinée par rapport à l'axe longitudinal V-V du levier ; dans ce levier est par ailleurs ménagé un logement, ici longitudinal, 30 accessible par la partie extérieure 21 du levier et dans lequel est mobile axialement un organe de réglage 31 coopérant avec la rampe du tiroir par un effet de came.

Il est clair que si le tiroir s'escamote complètement à l'intérieur du trou transversal 28 (voir les figures 3, 6 et 7), la portion d'appui par laquelle le levier vient en appui contre la portée complémentaire de la douille comporte à nouveau, comme dans les solutions classiques, une portion fixe de la surface externe de ce levier (voir les figures 6 et 7).

On voit par contre sur les figures 1 et 8 que le débattement angulaire du levier en pivotement autour de l'arbre 23 est d'autant plus réduit que le tiroir s'étend en dehors du trou transversal. Dans l'exemple de la figure 8, ce débattement est de 11.38° ; il peut en variante être fixé à n'importe quelle valeur entre 0° (figure 6) et le débattement maximum de la figure 7, par exemple 25°.

Un mode de réalisation particulièrement simple de l'organe de réglage est une vis sans tête 31 engagée dans un filetage ménagé dans la surface interne du logement longitudinal 30.

Cette vis de réglage sans tête a ici une extrémité convexe. Celle-ci a avantageusement une extrémité tronconique dont le demi-angle au sommet est sensiblement égal à l'inclinaison de la rampe 29 par rapport à l'axe longitudinal V-V du levier. Cela garantit que la surface de contact entre l'organe de réglage 31 et le tiroir 27 n'est pas uniquement ponctuelle.

Le logement longitudinal 30 de l'organe de réglage est avantageusement ménagé dans le prolongement d'un logement alésé 32 classiquement réalisé à l'intérieur même de la partie externe 21 du levier et destiné à recevoir une vis de liaison servant à solidariser temporairement le levier à un levier ou poignée de manoeuvre destinée à être manipulée par un utilisateur.

En variante non représentée, le logement 30 de l'organe de réglage présente une inclinaison non nulle par rapport à l'axe longitudinal du levier; cette inclinaison peut même être de 90°. Lorsque ce logement est dans le prolongement du trou transversal recevant le tiroir, le réglage en position de ce tiroir peut être obtenu par rotation d'une vis de réglage, axialement fixe dans son logement, et pénétrant dans un trou fileté du tiroir.

De façon classique en soi, la portée d'appui 25 est disposée entre l'arbre transversal 24 et l'extrémité 21 du levier.

Le tiroir a avantageusement une section non-circulaire, par exemple ovale, elliptique ou polygonale. Cela évite que le tiroir puisse tourner ; la rampe (si elle existe) conserve donc une inclinaison constante par rapport au levier. Toutefois, la coopération vis/rampe peut suffire dans certains cas pour empêcher la rotation d'un tiroir circulaire.

De préférence, cette section est rectangulaire et sa plus grande dimension s'étend parallèlement à l'arbre transversal : la surface de contact avec la portée complémentaire d'appui de la douille est donc importante.

La portion en saillie du tiroir est avantageusement convexe en sorte d'avoir un bon contact quelle que soit la position du tiroir dans le trou transversal.

La portion en saillie du tiroir est de préférence une portion de cylindre s'étendant transversalement à l'axe longitudinal du levier. Cela combine les deux avantages précités.

Il va de soi que de nombreuses variantes peuvent être proposées par l'homme de métier sans sortir du cadre de l'invention.

## Revendications

1. Cartouche de robinet mitigeur comportant un corps (10) muni d'une douille (22) ayant un axe de référence (Z-Z), des éléments internes de réglage de débit (16, 17, 18, 19) disposés à l'intérieur du corps et un levier (20), coopérant avec ces éléments internes pour régler le débit, articulé sur la douille (23) autour d'un arbre transversal (24) et ayant une partie extérieure (21) débouchant hors du corps, le levier et la douille comportant des portées complémentaires d'appui (25, 26) déterminant conjointement pour le levier une configuration de débit extrême, caractérisée en ce que la portée d'appui (25) du levier fait partie d'une portion en saillie d'un tiroir (27) monté coulissant dans un trou transversal (28) de ce levier, ce tiroir coopérant avec un organe de réglage (31) mobile dans un logement (30) du levier accessible à partir de l'extérieur de la cartouche.

2. Cartouche selon la revendication 1, caractérisée en ce que le tiroir comporte une rampe (29) inclinée par rapport à l'axe longitudinal du logement (30) du levier, ce logement ayant une inclinaison non nulle par rapport à la direction de ce trou transversal.

3. Cartouche selon la revendication 2, caractérisée en ce que ce logement est au moins approximativement longitudinal.

4. Cartouche selon la revendication 2 ou la revendication 3, caractérisée en ce que le logement est alésé et l'organe de réglage est une vis de réglage.

5. Cartouche selon la revendication 4, caractérisée en ce que cette vis de réglage comporte une extrémité tronconique dont le demi-angle au sommet est sensiblement égal à l'inclinaison de la rampe inclinée par rapport à l'axe longitudinal du logement du levier.

6. Cartouche selon la revendication 4 ou la revendication 5, caractérisée en ce que le logement de l'organe de réglage est ménagé dans le prolongement d'un logement alésé ménagé dans l'extrémité du levier.

7. Cartouche selon l'une quelconque des revendications 1 à 4, caractérisée en ce que le trou transversal est ménagé dans le levier entre l'arbre transversal et l'extrémité du levier.

8. Cartouche selon l'une quelconque des revendications 1 à 7, caractérisée en ce que le tiroir a une section non-circulaire.

9. Cartouche selon la revendication 8, caractérisée en ce que le tiroir a une section polygonale.

10. Cartouche selon la revendication 9, caractérisée en ce que le tiroir a une section sensiblement rectangulaire dont la plus grande distance s'étend perpendiculairement à l'axe longitudinal du levier.

11. Cartouche selon l'une quelconque des revendications 1 à 10, caractérisée en ce que la portion en saillie du tiroir est convexe.

12. Cartouche selon la revendication 11, caractérisée en ce que la portion en saillie du tiroir est une portion de cylindre s'étendant transversalement à l'axe longitudinal du levier.
